# EUROPEAN PATENT APPLICATION

(11) **EP 4 386 937 A1**
(43) Date of publication of application: **19.06.2024**
(21) Application number: 22213805.9
(22) Date of filing: 15.12.2022
(51) Int. Cl.: H01M 10/613, H01M 10/625, H01M 10/643, H01M 10/653, H01M 10/6551, H01M 10/6552, H01M 10/6555, H01M 10/6557, H01M 50/213, H01M 50/291, H01M 50/293

(54) **BATTERY PACK WITH COOLING SYSTEM**

(71) Applicant: VOLVO TRUCK CORPORATION, 405 08 Göteborg (SE)
(72) Inventor: SARKAR, Shantanu, 560034 Bengaluru Karnataka (IN)
(74) Representative: Ström & Gulliksson AB

(57) **Abstract**

A battery pack (1) for an electrical vehicle, comprising: a plurality of battery cells (2) extending along a vertical axis (V) within said battery pack, and a cooling system (3), wherein said cooling system (3) comprises a plurality of cooling plates (4) each having an opening (5) arranged to individually enclose said battery cells (2), wherein a cooling plate chamber (6) is formed around each battery cell (2), and multiple liquid coolant channels (7) arranged to extend along said vertical axis (V) of said cylindrical battery cells (2), and being separate from said cooling plate chamber (6), and a phase change material (8) provided within said cooling plate chamber (6).

## Description

### TECHNICAL FIELD

The disclosure relates generally to a battery pack for electrical vehicles. In particular aspects, the disclosure relates to a battery pack comprising a cooling system having a honeycomb structure. The disclosure can be applied in any heavy-duty vehicle utilizing electrical batteries, such as trucks, buses, and construction equipment. Although the disclosure may be described with respect to a particular vehicle, the disclosure is not restricted to any particular vehicle.

### BACKGROUND

Battery packs for electrical vehicles include cooling systems, to ensure proper functioning of the battery cells, as well as prevent damages or even fires in case of unexpected failure of a battery cell. Existing cooling systems are conventionally based on a single point of cooling or a single cooling system, such as only cooling plate with liquid, or immersive cooling or a phase change material (PCM).

However, for a next generation batteries having a higher capacity, the existing single cooling system approach will not necessarily be sufficient. There is therefore a need for a new and improved cooling system for battery packs in electrical vehicles. Further to this, battery packs require a strong structure to be able to withstand not only thermal runaway of the battery cells, but also external impact, such as accidents.

### SUMMARY

According to a first aspect of the disclosure, there is provided a battery pack for an electrical vehicle, comprising: a plurality of battery cells extending along a vertical axis within said battery pack, and a cooling system, wherein said cooling system comprises a plurality of cooling plates each having an opening arranged to individually enclose said battery cells, wherein a cooling plate chamber is formed around each battery cell, and multiple liquid coolant channels arranged to extend along said vertical axis of said cylindrical battery cell, and being separate from said cooling plate chamber, and a phase change material provided within said cooling plate chamber.

The first aspect of the disclosure may seek to provide for a prolonged life time and safety of the battery pack.

A technical benefit may include a more efficient cooling of the battery cells and an enhanced structural stability of the battery pack through the combination of a phase change material, cooling plates and the flow of liquid coolant around battery cells. A combination of multiple cooling strategies, i.e. the cooling plates, the PCM and the liquid coolant provide a cooling system which has a higher thermal efficiency as well as increasing the strength of the battery pack. Having liquid coolant pathway which flows along the length of a battery cell and is separate from the battery cell may further improve the cooling efficiency of the battery pack, since if one battery cell warms up more than the others the liquid coolant cooling this battery cell will not affect the other battery cells in the battery pack.

In some examples, said respective cooling plate may extend along said vertical axis to form said cooling plate chamber.

In some examples, any one of said cooling plate, opening or cooling plate chamber may be provided with a hexagonal cross-section.

In some examples, any one of said cooling plate, opening or cooling plate chamber may be provided with an octagonal cross-section.

In some examples, multiple adjoining cooling plates form a honeycomb pattern. A technical benefit may include structural integrity, as well as a space efficient utilization of the battery pack.

In some examples, said battery cell may be a cylindrical battery cell. Cylindrical battery cells are mainly used in battery packs for electrical vehicles.

In some examples, said cooling plate comprises any one of a steel material, an aluminum material and an aluminum alloy material. The technical benefit may include that the cooling plate is made from a conventional material.

In some examples, said battery pack further comprises a liquid coolant inlet duct arranged at one end and a liquid coolant outlet duct arranged at an opposing end as seen in along the vertical axis. The technical benefits may include allowing for a uniform flow of liquid coolant trough the coolant channels and along the length of the battery cells.

In some examples, the liquid coolant channels may be formed in spaces in-between multiple cooling plates. The technical benefits may include a more efficient cooling of each battery cell, as the flow of liquid coolant runs along the length of the battery cell.

In some examples, the phase change material is arranged to enclose and be in contact with said battery cell and to extend along a length of said battery cell.

In some examples, the phase change material may further be arranged to fill out said cooling plate chamber. The technical benefits may include that the PCM more efficiently can absorb and transfer heat away from an individual battery cell or transfer cooling effect to the battery cell.

In some examples, the phase change material may comprise any one of solution of salt in water, salt hydrates, organic polymers and solid-solid materials.

According to a second aspect of the disclosure, a vehicle comprising the battery pack according the first aspect.

According to a third aspect, there is provided the use of the battery pack according to the first aspect in a vehicle.

According to a fourth aspect, there is provided a vehicle according the second aspect, or the use according to the third aspect, wherein said vehicle is an electrical vehicle.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** is an exemplary battery pack according to the present disclosure.
**FIG. 2** is an exemplary battery cell enclosed by a cooling plate according to the present disclosure.
**FIG. 3** is an exemplary cylindrical battery cell.

### DETAILED DESCRIPTION

Aspects set forth below represent the necessary information to enable those skilled in the art to practice the disclosure.

The present disclosure relates to a multiple cooling system for a battery pack in an electrical vehicle. The cooling system comprises cooling plates, preferably having a honeycomb shaped structure, where battery cells are placed in individual openings or chambers within the cooling plate. A combination of different cooling arrangements are provided to carry away the heat in more efficient way than existing systems. Along with enhanced cooling, the cooling structure will also provide additional strength and durability to the battery pack structure. This enhances the cell life and increases the safety of the battery pack.

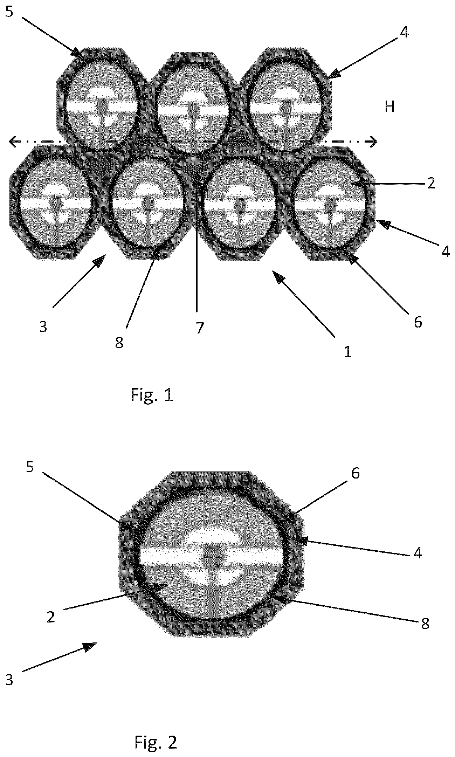

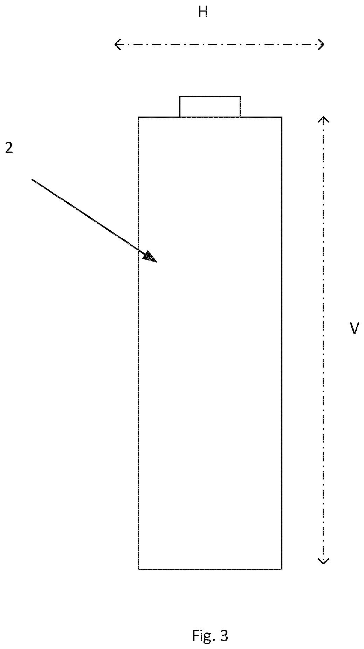

**FIG. 1** illustrates a battery pack 1 having multiple battery cells 2 and a cooling system 3. The cooling system comprises at least one cooling plate 4. According to one example, the number of cooling plates correspond to the number of battery cells present in the battery pack 1. The cooling plate 4 is provided with an opening 5 forming part of a cooling plate chamber 6 in which an individual battery cell 2 is placed or arranged. The hollow cooling plate chamber 6 extends along a vertical axis of the battery cell and substantially along the entire length of the battery cell 2. The vertical axis extends in direction perpendicular to the horizontal axis H as shown in FIG. 1. The extension of the vertical axis V is illustrated in **FIG. 3** showing the extension along the length of a cylindrical battery cell 2.

In a cooling system 2, multiple cooling plates 4 are arranged such that multiple liquid coolant channels 7 are formed between adjacent plates 4 and arranged to extend along the vertical axis A. As illustrated in FIG. 1 the channels 7 are further arranged to be separated from the battery cells 2. As shown in FIG. 1 a vertical pathway of the liquid coolant is squeezed between other structures in the cooling system, i.e. between the cooling plates and the battery cells. The individual coolant pathway along the length of the battery cell will provide fresh coolant with minimum temperature at all locations, which allows for a more uniform temperature of the battery pack as a maximum cooling effect can be achieved for all battery cells irrespective of their position in the battery pack. According to one example the channels 7 may have a triangular cross-section. According to another example the channels 7 may have a rectangular cross-section.

As illustrated in FIG. 1 the multiple cooling plates 4 substantially may form a hexagonal grid or honeycomb structure or pattern which may have a circle packing as seen in a top or bottom view of the battery pack 1. A cooling system 2 having this configuration further has the additional advantage of structural stability as well as using the least amount of material to create a lattice of cells or chambers within a given volume.

**FIG. 2** illustrates a single battery cell 2 arranged within an opening 5 or chamber 6 of a cooling plate 4. A phase change material (PCM) 8 is arranged between the battery cell 2 and the cooling plate 4. According to one example the PCM material is provided to enclose the battery cell 2 and substantially fill the cooling plate chamber 6, such that gaps between the battery cell and the cooling plate are avoided and an efficient heat transfer is provided. PMC materials are conventionally soft and pliable.

According to one example the opening 5 or chamber 6 of the cooling plate 4 may have an octagonal shape or cross-section.

According to one example the opening 5 or chamber 6 of the cooling plate 4 may have an hexagonal shape or cross-section

According to one example (not shown) the battery pack 1 may be provided with an inlet duct for a liquid coolant. The inlet may be provided at the top or bottom portion of the battery pack, as seen along the vertical axis V, and an outlet duct for the liquid coolant may be provided at the opposite end thereof. The inlet and outlet ducts may be common to all the channels 7, i.e. provide a flow of coolant to all channels and allowing for a flow or pathway of the liquid coolant in a vertical direction of the battery pack 1, i.e. along the vertical axis A and along the length of the battery cells (as opposed to across the battery cells). The liquid coolant will be distributed evenly through the channels 7 and along the length of the battery cells. Since the channels 7 are arranged between the cooling plates 4 the coolant will carry the heat away from cells 2 at faster pace. This will ensure that all the cells will be at a uniform temperature.

The PCM material may be any conventional material used as phase change material. These include solutions of salts in water (eutectic materials), salt hydrates which are specific salts that are able to incorporate water of crystallization, and organic materials. Organic PCM materials may include for instance polymers with long chain molecules, such as those exhibiting high orders of crystallinity when freezing. Examples of materials which can be used for positive temperature PCMs include waxes, oils, fatty acids and poly glycols. Another type of PMC is a so called solid-solid material, which do not exhibit a visible change in the appearance of the PCM (other than a slight expansion/ contraction) during phase change and therefore overcome all problems associated with handling liquids.

According to one example, the cooling plates 4 are made from any one of a steel, an aluminum and an aluminum alloy. Conventionally cooling plates for battery packs are made form an aluminum alloy.

The cooling liquid may be any conventional battery liquid coolant, such as those based on ethylene glycol.

The above battery pack 1 and cooling system 3 will have multiple advantage in that all cells will be separate from each other and so any damage to the cells, such as for instance cell burst due to thermal runaway or through external impact on a single cell will not impact the neighboring cell. Further to this, in case of sudden rise in temperature in a single cell, the adjacent PCM will absorb the high temperature and will reduce its impact to neighboring cells. Such setup will provide us with localized temperature control across the system. A honeycomb (HC) structure of plates will help us to optimize the space inside the battery pack. HC plates between the cells will provide additional strength to the battery pack structure. This will make the pack more durable and robust. Such system will enhance life time of the battery pack and make it safer.

The invention will now be described by way of examples.
Example 1: A battery pack 1 for an electrical vehicle, comprising: a plurality of battery cells 2 extending along a vertical axis V within said battery pack, and a cooling system 3, wherein said cooling system 3 comprises a plurality of cooling plates 4 each having an opening 5 arranged to individually enclose said battery cells 2, wherein a cooling plate chamber 6 is formed around each battery cell 2, and multiple liquid coolant channels 7 arranged to extend along said vertical axis V of said cylindrical battery cells 2, and being separate from said cooling plate chamber 6, and a phase change material 8 provided within said cooling plate chamber 6.
Example 2: The battery pack according to example 1, wherein said respective cooling plate 4 extend along said vertical axis V to form said cooling plate chamber 6.
Example 3: The battery pack according to any one of examples 1 to 2, wherein any one of said cooling plate 4, opening 5 or cooling plate chamber 6 is provided with a hexagonal cross-section.
Example 4: The battery pack according to any one of examples 1 to 2, wherein any one of said cooling plate 4, opening 5 or cooling plate chamber 6 is provided an octagonal cross-section.
Example 5: The battery pack according to any one of examples 1 to 4, wherein multiple adjoining cooling plates 4 form a honeycomb pattern.
Example 6: The battery pack 1 according to any one of examples 1 to 5, wherein said battery cell 2 is a cylindrical battery cell.
Example 7: The battery pack according to any one of examples 1 or 6, wherein said cooling plate 4 comprises a steel material.
Example 8: The battery pack 1 according to any one of examples 1 or 6, wherein said cooling plate (4) comprises an aluminum material.
Example 9: The battery pack 1 according to any one of examples 1 or 6, wherein said cooling plate 4 comprises an aluminum alloy material.
Example 10: The battery pack 1 according to any one of examples 1 to 9, wherein said battery pack 1 further comprises a liquid coolant inlet duct arranged at one end and a liquid coolant outlet duct arranged at an opposing end as seen in along the vertical axis V.
Example 11: The battery pack 1 according to any one of examples 1 to 10, wherein said liquid coolant channels 7 are formed in spaces in-between multiple cooling plates 4.
Example 12: The battery pack1 according to any one of examples 1 to 11, wherein said phase change material 8 is arranged to enclose and be in contact with said battery cell 2 and to extend along a length of said battery cell.
Example 13: The battery pack 1 according to example 12, wherein said phase change material is arranged to fill out said cooling plate chamber.
Example 14: The battery pack 1 according to any one of the preceding examples, wherein said phase change material comprises a solution of salt in water.
Example 15: The battery pack 1 according to any one of examples 1 to 13, wherein said phase change material comprises salt hydrates.
Example 16: The battery pack 1 according to any one of examples 1 to 13, wherein said phase change material comprises organic polymers.
Example 17: The battery pack 1 according to any one of examples 1 to 13, wherein said phase change material comprises solid-solid materials.
Example 18: A vehicle comprising the battery pack 1 according to any of examples 1-17.
Example 19: Use of the battery pack 1 according to any one of examples 1-17 in a vehicle.
Example 20: A vehicle according to example 18, or the use according to example 19, wherein said vehicle is an electrical vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A battery pack (1) for an electrical vehicle, comprising:
a plurality of battery cells (2) extending along a vertical axis (V) within said battery pack, and a cooling system (3), wherein said cooling system (3) comprises a plurality of cooling plates (4) each having an opening (5) arranged to individually enclose said battery cells (2), wherein a cooling plate chamber (6) is formed around each battery cell (2), and
multiple liquid coolant channels (7) arranged to extend along said vertical axis (V) of said cylindrical battery cells (2), and being separate from said cooling plate chamber (6), and
a phase change material (8) provided within said cooling plate chamber (6).

2. The battery pack (1) according to claim 1, wherein said respective cooling plate (4) extend along said vertical axis (V) to form said cooling plate chamber (6).

3. The battery pack (1) according to any one of claims 1 to 2, wherein any one of said cooling plate (4), opening (5) or cooling plate chamber (6) is provided with a hexagonal cross-section.

4. The battery pack (1) according to any one of claims 1 to 2, wherein any one of said cooling plate (4), opening (5) or cooling plate chamber (6) is provided an octagonal cross-section.

5. The battery pack (1) according to any one of claims 1 to 4, wherein multiple adjoining cooling plates (4) form a honeycomb pattern.

6. The battery pack (1) according to any one of claims 1 to 5, wherein said battery cell (2) is a cylindrical battery cell.

7. The battery pack (1) according to any one of claims 1 or 6, wherein said cooling plate (4) comprises any one of a steel material, an aluminium material and an aluminium alloy material.

8. The battery pack (1) according to any one of claims 1 to 7, wherein said battery pack further comprises a liquid coolant inlet duct arranged at one end and a liquid coolant outlet duct arranged at an opposing end as seen in along the vertical axis (V).

9. The battery pack (1) according to any one of claims 1 to 10, wherein said liquid coolant channels (7) are formed in spaces in-between multiple cooling plates (4).

10. The battery pack (1) according to any one of claims 1 to 11, wherein said phase change material (8) is arranged to enclose and be in contact with said battery cell (2) and to extend along a length of said battery cell.

11. The battery pack (1) according to claim 12, wherein said phase change material is arranged to fill out said cooling plate chamber.

12. The battery pack (1) according to any one of the preceding claims, wherein said phase change material comprises any one of a solution of salt in water, salt hydrates, organic polymers and solid-solid materials.

13. A vehicle comprising the battery pack (1) according to any of claims 1-12.

14. Use of the battery pack (1) according to any one of claim 1-13 in a vehicle.

15. A vehicle according to claim 18, or the use according to claim 14, wherein said vehicle is an electrical vehicle.
